# FASCICULE DE BREVET EUROPEEN

(11) **EP 0 532 631 B1**
(45) Date de publication et mention de la délivrance du brevet: **15.12.1993**
(21) Numéro de dépôt: 91911170.8
(22) Date de dépôt: 05.06.1991
(51) Int. Cl.: A23F 5/38, A23F 5/40

(54) **PRODUIT ALIMENTAIRE EN POUDRE POUR LA PREPARATION DE CAFE INSTANTANE, ET SON PROCEDE DE FABRICATION**
PULVERFÖRMIGES NAHRUNGSMITTEL ZUR HERSTELLUNG VON INSTANTKAFFEE UND VERFAHREN ZU DESSEN HERSTELLUNG
POWDERED FOOD PRODUCT FOR THE PREPARATION OF INSTANT COFFEE AND PROCESS FOR ITS MANUFACTURE

(30) Priorité: 05.06.1990 FR 9007120
(43) Date de publication de la demande: 24.03.1993
(73) Titulaire: SERVCO S.P.A., I-20121 Milano (IT)
(72) Inventeur: BIFARO, Antonio, I-21052 Busto Arsizio (IT); CACCIA DOMINIONI, Amadeo, I-20014 Nerviano (IT); CHIAPPA, Ottorino, I-20052 Monza (IT); FAVERO, Gianfranco, I-20077 Melegnano (IT); FEDRIGA, Franco, I-20134 Milano (IT); SALVI, Giancarlo Via Clarice Tartufari, 161, I-00128 Castel di Decima-Roma (IT)
(74) Mandataire: Nithardt, Roland
(86) Numéro de dépôt international: EP9101031
(87) Numéro de publication internationale: WO9118517

(56) Documents cités:
- DE-A- 2 836 565
- FR-A- 2 258 799
- GB-A- 1 204 578
- GB-A- 2 006 603
- US-A- 3 143 428
- US-A- 3 227 558
- US-A- 4 045 586
- US-A- 4 594 257
- Derwent File Supplier WPI/WPIL, no. 86-011914(02), & JP-A-60237942 (Suntory), 26 novembre 1985

## Description

La présente invention concerne un procédé de fabrication d'un produit en poudre pour café instantané, formé de grains agglomérés contenant des particules d'un extrait soluble de café obtenu par une technique de dessication par pulvérisation et des particules de café torréfié finement broyé, comprenant les étapes suivantes :
- broyage de l'extrait soluble de café,
- formation d'un mélange homogène sec contenant l'extrait soluble broyé et de 2 à 20% en poids de café torréfié finement broyé,
- agglomération dudit mélange sec par une technique d'humidification et séchage, de manière à former des grains poreux.

L'invention concerne également un produit en poudre pour café instantané, susceptible d'être obtenu par ce procédé.

A l'heure actuelle, les extraits de café sont fabriqués soit par lyophilisation ("freeze drying"), soit par dessiccation par pulvérisation ("spray drying"), donnant un extrait appelé aussi "extrait spray". La lyophilisation donne un extrait de café sous une forme granulaire facilement soluble et immédiatement utilisable, mais elle est particulièrement coûteuse. Par contre, le procédé de dessiccation par pulvérisation est simple et relativement peu coûteux, de sorte qu'il est appliqué industriellement dans la majorité des cas, mais le produit obtenu présente quelques inconvénients.

En effet, l'extrait de café desséché par pulvérisation est une poudre constituée de microsphères caractéristiques de ce principe de dessiccation. Ces microsphères ont tendance à se coller entre elles sous l'effet de l'humidité de l'air et elles présentent certaines difficultés de dissolution, si bien que l'on préfère généralement les agglomérer sous la forme de grains plus gros et poreux, rendant l'utilisation du produit plus facile et plus rapide. Comme l'agglomération de particules sphériques est assez difficile parce que les zones de contact entre les sphères sont ponctuelles et peu nombreuses, il est nécessaire de broyer les sphères par mouture afin d'obtenir des particules de formes géométriques irrégulières, offrant une plus grande surface spécifique et plus de zones de contact en vue de leur agglomération, qui peut se faire par humidification et séchage.

Cependant, les extraits "spray" ainsi obtenus n'ont pas les mêmes qualités gustatives que les extraits lyophilisés ou que le café préparé par une méthode traditionnelle. La demande de brevet britannique GB-A-2'006'603 décrit un procédé permettant de remédier à cet inconvénient, par addition de 2 à 20% en poids de café torréfié finement broyé à très basse température. 90% en poids de ce café passe au tamis de 75 µm. Ce café à mouture fine est ajouté à l'extrait soluble dans un moulin où l'extrait est broyé, puis le mélange sec obtenu est aggloméré pour former des grains poreux ayant une taille moyenne plus grande que 850 µm. Ce procédé fournit une poudre permettant de préparer un café instantané dans lequel la présence de particules très fines et insolubles de café est ressentie de manière agréable par le consommateur et lui donne une impression subliminale de "vrai" café. Par ailleurs, ce procédé a l'avantage de rester moins coûteux que la lyophilisation.

Toutefois, le produit pulvérulent obtenu par le procédé ci-dessus a une porosité relativement limitée qui tend en outre à diminuer au cours du temps, parce que les particules d'extrait soluble, très sensibles à l'humidité de l'air, tendent à se ramollir en surface et à s'agglutiner en se rapprochant les unes des autres.

Le brevet US N° 4'594'257 décrit aussi un procédé pour fabriquer un produit du genre décrit ci-dessus, mais où les particules d'extrait soluble et de café torréfié sont agglomérées après avoir été compactées ensemble par vibration.

La présente invention a pour but d'améliorer un produit en poudre contenant de l'extrait "spray" et du café torréfié, de façon à obtenir des grains dont la porosité est élevée et se maintient longtemps, afin que le produit présente une bonne fluidité à sec et une grande rapidité de dissolution lors de la préparation de la boisson.

Dans ce but, la présente invention a pour objet un procédé du genre indiqué plus haut, caractérisé en ce que ledit mélange sec contient en outre des particules d'au moins un polysaccharide finement broyé.

De préférence, ledit polysaccharide est de la maltodextrine. En outre, la granulométrie des particules de polysaccharide est plus fine que la granulométrie des particules d'extrait soluble broyé.

Dans une forme de réalisation préférée, la quantité de café torréfié représente entre 5% et 10% en poids de l'extrait soluble. La quantité de polysaccharide peut représenter entre 5% et 10% en poids de l'extrait soluble.

De préférence, l'extrait soluble comporte, après broyage, au moins 90% en poids de particules plus petites que 300 µm. Le café torréfié finement broyé comporte de préférence au moins 90% en poids de particules plus petites que 300 µm.

De préférence, le polysaccharide finement broyé comporte au moins 90% en poids de particules plus petites que 100 µm.

Les phénomènes intervenant dans un produit selon la présente invention peuvent être expliqués de la manière suivante. Comme l'extrait de café est très hygroscopique, la surface de ses particules se ramollit en présence d'eau ou de vapeur d'eau. Quand il est sous la forme de particules agglomérées en grains poreux, l'humidité produit alors, à l'extérieur et à l'intérieur des grains, une pellicule de solution de café qui est si concentrée et visqueuse qu'elle empêche ensuite une dissolution instantanée des grains. Ceci paraît jouer un rôle important dans les inconvénients des produits de l'art antérieur.

On connaît aussi des procédés où des sucres (des monosaccharides ou des disaccharides) finement moulus sont ajoutés à des extraits solubles de café, pour intervenir dans un processus d'agglomération.

La demande de brevet allemand DE-A-2 836 565 décrit un exemple Nº2 où un extrait de café de type "spray" est broyé avec 15% en poids de lactose amorphe, puis aggloméré à la vapeur et séché. Le brevet US N° 3'227'558 décrit la fabrication d'un produit pour boisson instantanée où un extrait de café est additionné de sucre et/ou de lait en poudre, puis finement moulu, et enfin aggloméré. Les mono- ou disaccharides utilisés dans ces procédés sont en général très solubles et ils ne contribuent donc pas à éviter les inconvénients susmentionnés de l'extrait soluble de café. En outre, ils ont l'inconvénient d'adoucir le café et d'épaissir la fraction dissoute pendant le processus d'agglomération.

Par contre, les polysaccharides et en particulier la maltodextrine, dans la présente invention, ont le grand avantage d'atténuer les effets de la nature hygroscopique de l'extrait soluble de café, en maintenant plus espacées les particules d'extrait et en restreignant ainsi la formation d'un trop grand nombre de ponts entre ces particules, ce qui empêche une agglomération trop dense pouvant aller jusqu'à l'obstruction des capillaires par où l'eau devra pénétrer dans les grains poreux pour les dissoudre.

Dans le produit fabriqué selon l'invention, la porosité est très grande et les canaux capillaires sont bien ouverts. Lorsque le produit est jeté dans l'eau pour former du café instantané, chaque grain poreux est dispersé presque instantanément par le mécanisme suivant :
- arrivée du grain sur la surface de l'eau;
- pénétration rapide de l'eau dans le grain, ce qui l'alourdit et le fait descendre;
- pendant que le grain s'enfonce dans l'eau, la pression hydrostatique dans les capillaires augmente jusqu'à faire éclater le grain qui se disperse alors instantanément dans l'eau, libérant à la fois les particules non dissoutes de polysaccharide (maltodextrine) et les particules insolubles de café. C'est ainsi que ces dernières sont bien distribuées dans toute la boisson instantanée.

Pour mieux faire comprendre la présente invention, on décrira ci-dessous une forme de réalisation du procédé de fabrication du produit, donnée à titre d'exemple et en référence aux dessins annexés, dans lesquels :
la figure 1 est un schéma-bloc du procédé de fabrication, et
la figure 2 est un diagramme granulométrique des composants utilisés dans ce procédé.

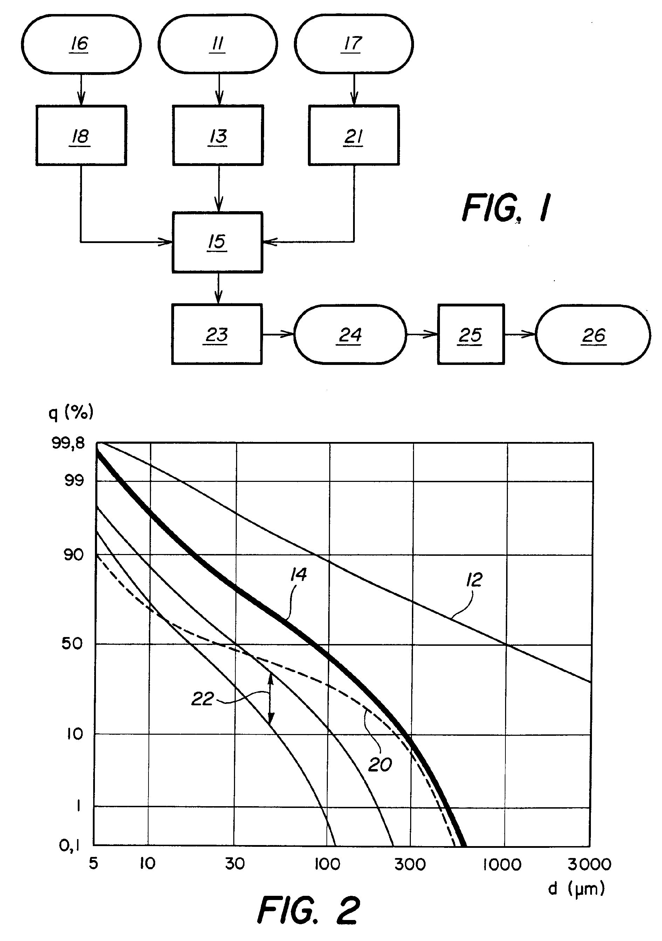

Le procédé illustré par la figure 1 utilise un extrait soluble de café 11 du type "extrait spray", c'est-à-dire obtenu par une technique de dessiccation par pulvérisation. Cet extrait est formé essentiellement de microsphères ayant la granulométrie représentée par la courbe 12 de la figure 2. Dans ce diagramme, **d** représente la taille des grains et **q** le pourcentage pondéral des grains plus grands que **d**. On soumet cet extrait à un broyage 13 dans un moulin pour le réduire à une granulométrie représentée par la courbe 14. La finesse de l'extrait broyé se caractérise notamment par une proportion d'au moins 90% en poids de particules plus petites que 300 µm. Dans l'étape suivante 15, cet extrait soluble broyé est additionné d'une quantité dosée de poudre de café torréfié 16 et de poudre de maltodextrine 17. Le café torréfié 16 est soumis à un broyage très fin 18 de manière à présenter approximativement la courbe granulométrique 20, sur laquelle on remarque qu'au moins 90% en poids des particules de la poudre sont plus petites que 300 µm et environ 50% sont plus petites que 25 µm. La maltodextrine 17 est également soumise à un broyage très fin 21 pour entrer dans le fuseau granulométrique 22 de la figure 2. On remarque qu'au moins 90% des particules du fuseau 22 sont plus petites que 100 µm et que la granulométrie de la maltodextrine broyée est nettement plus fine que celle de l'extrait soluble broyé selon la courbe 14. L'addition de café torréfié broyé représente de préférence entre 5 et 10% du poids de l'extrait soluble, et l'addition de maltodextrine représente aussi de 5 à 10% de ce poids. L'étape 15 fournit un mélange homogène qui est soumis à un processus d'agglomération par humidification et séchage 23, effectué par des techniques usuelles dans le domaine de la fabrication des poudres pour boissons instantanées. L'humidification des particules de poudre peut se faire par nébulisation d'eau, par de la vapeur, etc., dans le but d'humidifier la surface des particules et de dissoudre une couche très mince de la surface des particules de l'extrait. Ceci peut se faire par exemple dans un diffuseur où la poudre est exposée à un jet de vapeur et d'air chaud. La poudre est ensuite séchée en étant agitée, par exemple dans un tambour sécheur, de sorte que les particules sont agglomérées sous la forme de grains poreux relativement gros qui se mouillent facilement et se défont rapidement dans l'eau par dissolution de l'extrait soluble. Le produit fini 24 obtenu en vrac à la fin de l'étape 23 passe de préférence par une étape de pesage et emballage 25 pour donner un produit conditionné 26 prêt à la vente.

Les particules insolubles de café et les particules relativement peu solubles de maltodextrine facilitent l'obtention de grains poreux et légers par le processus d'agglomération, en jouant le rôle d'éléments inertes entre les particules beaucoup plus solubles d'extrait de café, qu'elles maintiennent à distance les unes des autres en les empêchant de s'agglomérer en grains compacts ou même en une seule masse. Ainsi, la réalisation industrielle du processus d'agglomération est sensiblement plus facile qu'avec l'extrait soluble additionné d'une petite quantité de poudre de café. L'utilisation de la maltodextrine a notamment pour effet une augmentation de 30 à 40 % de la porosité, ainsi qu'une meilleure régularité granulométrique.

La présente invention n'est pas limitée à l'exemple de réalisation décrit ci-dessus, et peut faire l'objet de diverses modifications ou variantes. En particulier, la maltodextrine peut être remplacée par un ou plusieurs autres polysaccharides ayant des propriétés similaires, notamment une solubilité relativement faible, et n'affectant pas défavorablement le goût du café.

## Revendications

1. Procédé de fabrication d'un produit en poudre pour café instantané, formé de grains agglomérés contenant des particules d'un extrait soluble de café obtenu par une technique de dessication par pulvérisation et des particules de café torréfié finement broyé, comprenant les étapes suivantes :
- broyage de l'extrait soluble de café,
- formation d'un mélange homogène sec contenant l'extrait soluble broyé et de 2 à 20% en poids de café torréfié finement broyé,
- agglomération dudit mélange sec par une technique d'humidification et séchage, de manière à former des grains poreux, caractérisé en ce que ledit mélange sec contient en outre des particules d'au moins un polysaccharide finement broyé.

2. Procédé selon la revendication 1, caractérisé en ce que ledit polysaccharide est de la maltodextrine.

3. Procédé selon la revendication 1 ou 2, caractérisé en ce que la granulométrie des particules de polysaccharide est plus fine que la granulométrie des particules d'extrait soluble broyé.

4. Procédé selon la revendication 1, caractérisé en ce que la quantité de café torréfié représente entre 5% et 10% en poids de l'extrait soluble.

5. Procédé selon la revendication 1, caractérisé en ce que la quantité de polysaccharide dans le mélange représente entre 5% et 10% en poids de l'extrait soluble.

6. Procédé selon la revendication 1, caractérisé en ce que l'extrait soluble comporte, après broyage, au moins 90% en poids de particules plus petites que 300 µm.

7. Procédé selon la revendication 1, caractérisé en ce que le café torréfié finement broyé comporte au moins 90% en poids de particules plus petites que 300 µm.

8. Procédé selon la revendication 1 caractérisé en ce que le polysaccharide finement broyé comporte au moins 90% en poids de particules plus petites que 100 µm.

9. Produit en poudre pour café instantané, susceptible d'être obtenu par un procédé selon l'une des revendications 1 à 8.

## Patentansprüche

1. Verfahren zur Herstellung eines pulverförmigen Produkts für Instantkaffee, gebildet aus zusammengebackenen Körnern, die Teilchen eines löslichen Kaffee-Extrakts, gewonnen durch eine Technik des Trocknens durch Zerstäuben, und Teilchen von fein gemahlenem, gerösteten Kaffee enthalten, in dem folgende Schritte enthalten sind:
- Mahlen des löslichen Kaffee-Extrakts,
- Bilden einer homogenen Trockenmischung, worin gemahlener löslicher Extrakt und zwischen 2 bis 20 Gewichtsprozent fein gemahlener, gerösteter Kaffee enthalten sind,
- Zusammenbacken der besagten Trockenmischung durch eine Technik des Anfeuchtens und des Trocknens, damit poröse Körnchen entstehen,
**dadurch gekennzeichnet,** daß die besagte Trockenmischung darüber hinaus Teilchen wenigstens eines fein gemahlenen Polysaccharids enthält.

2. Verfahren gemäß Anspruch 1,
**dadurch gekennzeichnet,** daß es sich bei dem genannten Polysaccharid um Maltodextrin handelt.

3. Verfahren gemäß den Ansprüchen 1 und 2,
**dadurch gekennzeichnet,** daß die Korngröße der Polysaccharidteilchen feiner ist als die Korngröße der Teilchen des gemahlenen lös- lichen Extrakts.

4. Verfahren gemäß Anspruch 1,
**dadurch gekennzeichnet,** daß die Menge des gerösteten Kaffees zwischen 5 und 10 % des Gewichts des löslichen Extrakts ausmacht.

5. Verfahren gemäß Anspruch 1,
**dadurch gekennzeichnet,** daß die Menge des Polysaccharids in der Mischung zwischen 5 und 10 % des Gewichts des löslichen Extrakts ausmacht.

6. Verfahren gemäß Anspruch 1,
**dadurch gekennzeichnet,** daß der lösliche Extrakt nach dem Mahlvorgang wenig- stens 90 Gewichtsprozent an Teilchen, die kleiner als 300 µm sind, enthält.

7. Verfahren gemäß Anpruch 1,
**dadurch gekennzeichnet,** daß der geröstete, fein gemahlene Kaffee, wenigstens 90 Gewichtsprozent an Teilchen enthält, die kleiner als 300 µm sind.

8. Verfahren gemäß Anspruch 1,
**dadurch gekennzeichnet,** daß das fein gemahlene Polysaccharid wenigstens 90 Gewichtsprozent an Teilchen enthält, die kleiner als 100 µm sind.

9. Pulverförmiges Produkt für Instantkaffee, das durch ein Verfahren gemäß einem der Ansprüche 1 bis 8 gewonnen werden kann.

## Claims

1. Method for manufacturing powdered instant coffee product formed of agglomerated grains containing particles of a soluble coffee extract obtained using a spray drying process and particles of finely ground roast coffee, comprising the following steps :
- grinding the soluble coffee extract,
- forming a dry homogeneous mixture containing the ground soluble extract and from 2 to 20% by weight finely ground roast coffee,
- agglomerating said dry mixture using a humidification and drying technique to form porous grains, characterized in that said dry mixture further contains particles of at least one finely ground polysaccharide.

2. Method according to claim 1, characterized in that said polysaccharide is maltodextrin.

3. Method according to claim 1 or claim 2, characterized in that the granulometry of the polysaccharide grains is finer than that of the particles of ground soluble extract.

4. Method according to claim 1, characterized in that the amount of roast coffee represents between 5% and 10% by weight of the soluble extract.

5. Method according to claim 1, characterized in that the amount of polysaccharide in the mixture represents between 5% and 10% by weight of the soluble extract.

6. Method according to claim 1, characterized in that the soluble extract comprises, after grinding, at least 90% by weight of particles smaller than 300 µm.

7. Method according to claim 1, characterized in that the finely ground roast coffee comprises at least 90% by weight of particles smaller than 300 µm.

8. Method according to claim 1, characterized in that the finely ground polysaccharide comprises at least 90% by weight of particles smaller than 100 µm.

9. Powdered instant coffee product obtainable using the method according to any one of claims 1 through 8.
